# EUROPÄISCHE PATENTSCHRIFT

(11) **EP 2 230 674 B1**
(45) Veröffentlichungstag und Bekanntmachung des Hinweises auf die Patenterteilung: **12.06.2019**
(21) Anmeldenummer: 10450040.0
(22) Anmeldetag: 16.03.2010
(51) Int. Cl.: H01F 5/06, H01F 41/06, H01F 41/12, H02K 15/12

(54) **Verfahren zum Herstellen einer Spule**
Method for manufacturing a coil
Procédé de fabrication d'une bobine

(30) Priorität: 16.03.2009 AT 4192009
(43) Veröffentlichungstag der Anmeldung: 22.09.2010
(73) Patentinhaber: Egston System Electronics Eggenburg GmbH, 3730 Eggenburg (AT)
(72) Erfinder: Prand-Stritzko, Ernst, 2091 Langau (AT)
(74) Vertreter: Gibler & Poth Patentanwälte KG

(56) Entgegenhaltungen:
- EP-A1- 1 508 954
- DE-A1- 10 202 476
- DE-C1- 19 643 561
- DE-T1- 10 192 093
- DE-U- 7 430 007
- DE-U1- 7 640 891
- US-A1- 2008 136 286
- US-A1- 2008 290 979

## Beschreibung

Die Erfindung betrifft ein Verfahren zum Herstellen einer Spule gemäß dem Oberbegriff des Patentanspruches 1.

Spulen für eine elektrische Maschine, insbesondere für einen Elektromotor, sind bekannt. Derartige Spulen sind zur Anordnung auf einem Polzahn vorgesehen, wobei die Spule einen Hauptkörper des Polzahns umschließt und wobei die Spulen nach oben hin von einem Polkopf des Polzahns und nach unten hin von einem Polschuh des Polzahns eingeschlossen ist. Die Spule und der Polzahn bilden zusammen dabei einen Statorzahn aus. Mehrere radial um eine Statorzentralachse angeordnete Statorzähne bilden wiederum einen Stator der elektrischen Maschine, insbesondere des Elektromotors, aus. Die elektrische Maschine kann auch als Generator ausgebildet sein, wobei auch die Kombination Generator/Motor möglich ist, welches unter anderem als Starter-Generator bekannt ist.

Bei der elektrischen Maschine, insbesondere dem Elektromotor, ist Ziel bei geringem Volumen und bei geringem Gewicht eine hohe Leistung zu erzielen. Die Leistung kann dabei die Leistung der Umwandlung elektrische Leistung in mechanische Leistung als auch mechanische Leistung in elektrische Leistung bedeuten.

Wenn in der Spule ein - der elektrischen Leistung entsprechender - elektrischer Strom fließt, entsteht aufgrund des elektrischen Widerstandes des Spulendrahts Wärme im Spulendraht. Bei Hochleistungsanwendungen, wie diese bei der Verwendung bei Generatoren und/oder Elektromotoren oftmals der Fall ist, kann sich die dabei entstehende Wärme in der Spule, insbesondere in der Wicklung, stauen, wobei die Wärmeabfuhr der Wärme aus dem Spulendraht mit steigender elektrischer Leistung zunehmend ein Problem darstellt.

Die Spulen umfassen dabei üblicherweise Präzisionswicklungen, wobei bei einer Präzisionswicklung die einzelnen Windungen durch am Polschuh oder am Isolierkörper ausgebildete Führungen geführt sind. Die Führungen berühren den Spulendraht idealerweise im Wesentlichen lediglich punkt- oder linienförmig, da derart besonders einfach eine höchstmögliche Präzision der Führung gewährleistet werden kann. Nachteilig hat sich dabei gezeigt, dass bei derartigen Spulen die Wärmeabfuhr der Wärmeleistung aus dem Spulendraht besonders problematisch sein kann.

Aus der DE 101 92 093 T1 ist eine Spule bekannt, wobei der Spulendraht mit einem Bindematerial überzogen ist, und wobei eine nicht leitende Schicht zwischen Spule und Spulenträger angeordnet ist. Bei der Schicht handelt es sich um Papier, welches mit demselben Bindemittel wie der Draht beschichtet ist. Das Bindemittel des Drahtes und der nicht leitende Schicht wird erweicht, wodurch es Zwischenräume ausfüllt.

Aus der US 2008/290979 A1 ist eine Spule aus beschichtetem Draht bekannt, wobei nach dem Wickeln der Spule auf einen Kunststoff-Spulenkörper der Draht entweder erwärmt oder mit Alkohol behandelt wird, um die Beschichtung zu verflüssigen.

Aus der DE 76 40 891 U1 ist das Verbacken backlackisolierter Spulendrähte miteinander und mit einem Spulenträger bekannt.

Aus der DE 102 02 476 A1 ist eine Spule aus backlackisoliertem Draht bekannt, welcher auf einem Spulenträger aus Isoliermaterial angeordnet ist, welcher Spulenträger an zwei Seiten profilierte Rillen aufweist, um den Draht aufzunehmen. Nach dem Wickeln wird die Spule erwärmt und während des Aufschmelzens des Backlacks verpresst.

Die EP 1 508 954 A1 beschreibt ebenfalls das Verbacken und Verpressen einer backlackisolierten Spule mit einem Spulekörper.

Aus der US 2008/136286 A1, der DE 196 43 561 C1 und der DE 74 30 007 U sind unterschiedliche Verfahren zum Wickeln von Spulen bekannt.

Aufgabe der Erfindung ist es daher eine Spule der eingangs genannten Art anzugeben, mit welcher die genannten Nachteile vermieden werden können und mit welcher die im Betrieb der Spule im Spulendraht auftretende Wärmeleistung effizient aus der Wicklung abgeführt werden kann.

Erfindungsgemäß wird dies durch die Merkmale des Patentanspruches 1 erreicht.

Dadurch ergibt sich der Vorteil, dass der Wärmekontaktwiderstand zwischen dem Spulendraht und dem Isolierkörper, also der Wärmewiderstand beim Wärmefluss vom wärmeren Spulendraht in dem kühleren Isolierkörper, deutlich verringert wird, da die wirksame Kontaktfläche derart vergrößert ist.

Als Vergrößerung der ersten Kontaktfläche hin zur zweiten Kontaktfläche wird dabei einerseits die unterschiedliche Anordnung einer ersten Außenkontur der ersten Kontaktfläche zu einer zweiten Außenkontur der zweiten Kontaktfläche verstanden. Hiebei kann sich auch der Mittelpunkt des Spulendrahtes näher in Richtung des Isolierkörpers verschieben, wobei - entlang des Umfangs des Spulendrahtes gesehen - mehr Spulendrahtumfang, den Isolierkörpers berührt als dies ohne einem Erweichen der Fall ist.

Als Vergrößerung der ersten Kontaktfläche hin zur zweiten Kontaktfläche wird dabei andererseits auch eine bessere gegenseitige Anpassung einer ersten Mikrooberflächenstruktur der - an sich festen - Beschichtung des Spulendrahtes und einer zweiten Mikrooberflächenstruktur des - an sich festen - Isolierkörpers bei der zweiten Kontaktfläche im Vergleich zur ersten Kontaktfläche verstanden. Dabei werden auch jene Mikroflächen innerhalb der ersten Außenkontur bzw. der zweiten Außenkontur kleiner, an welchen - aufgrund von Oberflächenunebenheiten, beispielsweise Oberflächenrauigkeiten - die Beschichtung des Spulendrahtes zum Isolierkörper zumindest mikroskopisch beabstandet ist. Dabei sind diese Mikroflächen innerhalb der zweiten Kontaktfläche im Mittel kleiner als die Mikroflächen innerhalb der ersten Kontaktfläche. Dabei sind weiters auch die mikroskopischen Abstände zwischen der Beschichtung des Spulendrahtes und dem Isolierkörper an den Mikroflächen innerhalb der zweiten Kontaktfläche im Mittel kleiner als an den Mikroflächen innerhalb der ersten Kontaktfläche.

Insgesamt kann damit der gute Wärmeübergang, also der leichte Wärmefluss, vom Spulendraht auf den Isolierkörper gewährleistet werden, womit ein Wärmestau in der Wicklung vermieden werden kann. Vorteilhaft dabei ist, dass die elektrische Leistung in der Wicklung erhöht werden kann und/oder die Spule besonders kompakt, also mit geringem Volumen, ausgebildet sein kann.

Durch die bessere gegenseitige Anpassung der ersten Mikrooberflächenstruktur der - an sich festen - Beschichtung des Spulendrahtes und der zweiten Mikrooberflächenstruktur des - an sich festen - Isolierkörpers kann üblicherweise auch die Anhaftung des Spulendrahtes am Isolierkörper verbessert werden, womit der Spulendraht, welcher bei einer vergleichbaren herkömmlichen Spule nicht am Isolierkörper anhaftet, am Isolierkörper, insbesondere dauerhaft, haftet. In vorteilhafter und überraschender Weise hat sich dabei gezeigt, dass diese Haftung auch bei unterschiedlicher Wärmeausdehnung von Isolierkörper und Spulendraht über einen weiten Temperaturbereich und über viele Temperaturwechselzyklen bestehen bleibt, womit die Haftung eine Dauerstandsfestigkeit aufweist. Vorteilhaft dabei ist insbesondere, dass der gute Wärmeübergang vom Spulendraht zum Isolierkörper dauerhaft gewährleistet werden kann, womit die dauerhaft eine hohe Abtransportierbarkeit von Wärme aus der Wicklung gewährleistet werden kann, womit auch eine hohe Dauerstandsfestigkeit der Spule, des Statorzahnes, des Stators bzw. der elektrischen Maschine, insbesondere des Elektromotors, gewährleistet werden kann.

Die Unteransprüche, welche ebenso wie die Patentansprüche 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 schematisch und im Schnitt eine Fronsicht auf den Polzahn und den Isolierkörper, welcher als Spulenkörper ausgebildet ist, sowie schematisch den Schnitt durch den Spulendraht einiger Windungen,
Fig. 2 den Spulenkörper der Fig. 1 im Schrägriss geschnitten entlang eines in Fig. dargestellten Schnittes A-A,
Fig. 3 ein Detail des Spulenkörpers der Fig. 1 im Schnitt und in der Frontsicht gemäß Fig. 1,
Fig. 4 das Detail gemäß Fig. 3 des Spulenkörpers der Fig. 1 und - ebenso geschnitten dargestellt - vier Windungen eines auf den Spulenkörper gewickelten Spulendrahtes,
Fig. 5 das Detail gemäß Fig. 3 des Spulenkörpers der Fig. 1 und den Spulendraht gemäß Fig. 4 in einer ersten Ausführungsform der erfindungsgemäß hergestellten Spule,
Fig. 6 das Detail B der Fig. 4,
Fig. 7 das Detail C der Fig. 5,
Fig. 8 das Detail D der Fig. 6,
Fig. 9 das Detail E der Fig. 7,
Fig. 10 geschnitten und schematisch im Detail einen Teil einer Windung des Spulendrahtes sowie einen Teil eines Isoliermediums, welches als Isolierfolie oder als Isolierpapier ausgebildet ist,
Fig. 11 gemäß der Darstellung in Fig. 10 den Teil der Windung des Spulendrahtes gemäß Fig. 10 sowie den Teil des Isoliermediums gemäß Fig. 10 in einer zweiten Ausführungsform der erfindungsgemäß hergestellten Spule,
Fig. 12 gemäß der Darstellung in Fig. 10 den Teil der Windung des Spulendrahtes gemäß Fig. 10 sowie den Teil des Isoliermediums gemäß Fig. 10 in einer dritten Ausführungsform der erfindungsgemäß hergestellten Spule,
Fig. 13 gemäß der Darstellung in Fig. 10 den Teil der Windung des Spulendrahtes gemäß Fig. 10 sowie den Teil des Isoliermediums gemäß Fig. 10 in einer vierten Ausführungsform der erfindungsgemäß hergestellten Spule,

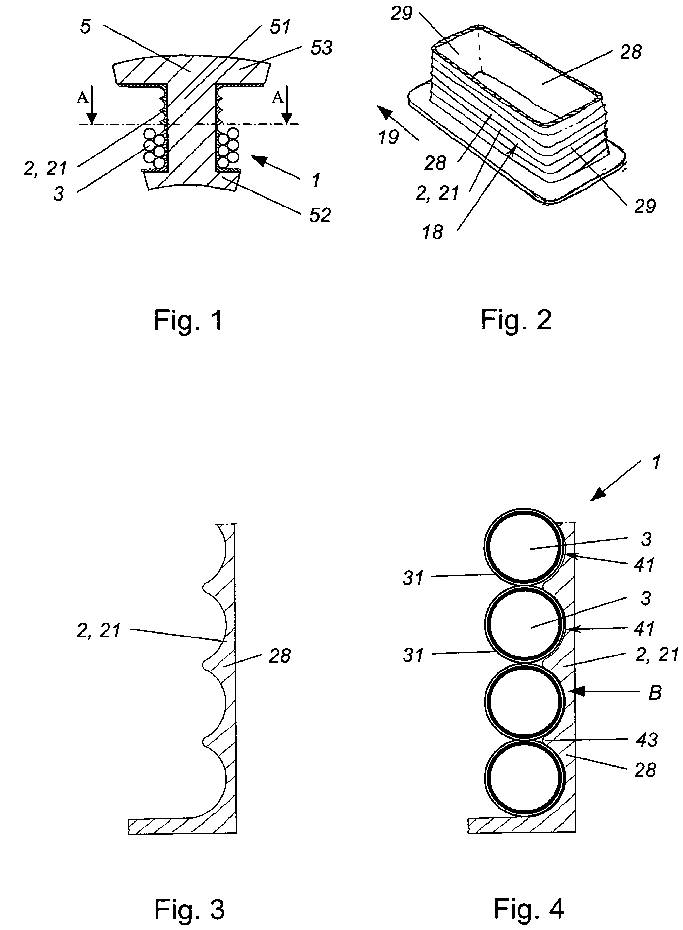

Die Fig. 1 bis 13 zeigen Teile und Details einer Spule 1 für eine elektrische Maschine, insbesondere einen Elektromotor, wobei die Spule 1 einen festen Isolierkörper 2 und eine Wicklung umfasst, wobei die Wicklung aus wenigstens einem Spulendraht 3 gewickelt ist, und wobei der Spulendraht 3 mit einer festen Beschichtung 31 beschichtet ist. Derartige Spulen 1 können in einem Verfahren zum Herstellen einer Spule 1 für eine elektrische Maschine, insbesondere einen Elektromotor, wobei ein fester Isolierkörper 2, insbesondere in einer Wickelmaschine, angeordnet wird, anschließend über dem Isolierkörper 2 zumindest ein eine feste isolierende Beschichtung 31 aufweisender Spulendraht 3 zu einer Wicklung gewickelt wird, wobei der Spulendraht 3 bereichsweise mit dem Isolierköper 2 kontaktiert wird, wobei die Summe der Fläche bzw. Flächen, an welcher der Spulendraht 3 den Isolierkörper 2 kontaktiert, nach dem Wickeln eine erste Kontaktfläche 41 zwischen dem Spulendraht 3 und dem Isolierkörper 2 ausbildet, hergestellt werden.

In Fig. 1 ist zusätzlich ein Polzahn 5 geschnitten und in Frontsicht dargestellt, wobei die Spule 1 den Polzahn 5 umschließt. Die Spule 1 und der Polzahn 5 bilden zusammen dabei einen Statorzahn aus. Mehrere, also wenigstens zwei, ringförmig um eine Statorzentralachse angeordnete Statorzähne bilden wiederum einen Stator der elektrischen Maschine, insbesondere des Elektromotors, aus. Die Statorzentralachse ist dabei parallel zur Blickrichtung der Frontsicht in Fig. 1 gerichtet. Insbesondere kann die Statorzentralachse parallel zu einer Längsrichtung 19 der Spule 1 ausgebildet sein, welche Längsrichtung 19 jene Richtung ausbildet entlang welcher die, insbesondere rechteckige, Spule 1 die längste Erstreckung aufweist.

Der Polzahn 5 weist üblicherweise einen quadratischen oder rechteckigen Querschnitt auf, wobei die Spule 1 - in Aufsicht normal zur Längsrichtung 19 gesehen - üblicherweise ebenfalls quadratisch oder rechteckig ist. In diesem Zusammenhang kann in vorteilhafter Weiterbildung vorgesehen sein, dass der Isolierkörper 2 - in Aufsicht, also in Blickrichtung des Schnitts A-A gesehen - eckig, insbesondere quadratisch, bevorzugt rechteckig, ausgebildet ist und dementsprechend Längswandungen 28 und Stirnwandungen 29 aufweist, welche zueinander abgewickelt angeordnet sind.

Die erste Kontaktfläche 41 bildet sich beim Wickeln des Spulendrahtes 3 auf bzw. über den festen Isolierkörper 2. Dabei tritt die feste Beschichtung 31 mit dem festen Isolierkörper 2 in Kontakt, wobei die feste Beschichtung 31 eine erste Mikrooberflächenstruktur und der feste Isolierkörper 2 eine zweite Mikrooberflächenstruktur aufweist. Diese Mikrooberflächenstrukturen umfassend die Oberflächenbeschaffenheit und die Oberflächenrauigkeit und sind stark von der Herstellmethode von dem Spulendraht 3, insbesondere der Beschichtung 31, und dem Isolierkörper 2 abhängig. In starker Vergrößerung der ersten Mikrooberflächenstruktur und der zweiten Mikrooberflächenstruktur umfassen die Oberflächen dabei Erhebungen, also Zähne, Zacken, Berge, Kämme, Stege und/oder Rippen, und Vertiefungen, also Senken, Einbuchtungen, Riefen, Krater und/oder Täler, ähnlich einer Landschaft aus. Insbesondere sind die erste Mikrooberflächenstruktur und die zweite Mikrooberflächenstruktur zueinander unterschiedlich und sind - auf Ebene der Mikrooberflächenstrukturen - nicht zueinanderpassend anordenbar. Die erste Kontaktfläche 41 ist derart in nicht vollflächig, sondern ist vielmehr lediglich die Summe vieler kleiner - gegebenenfalls zusammenhängender - erster Mikrokontaktflächen. Die ersten Mikrokontaktflächen sind dabei jene Punkte an welchen die Beschichtung 31 tatsächlich den Isolierkörper 2 berührt, also Erhebungen der Beschichtung 31 Erhebungen des Isolierkörpers 2 berühren. In diesem Sinne liegt die Beschichtung 31 lediglich oberflächig an dem Isolierkörper 2 an, wie dies beim Stand der Technik der Fall ist. Die nicht vollflächige erste Kontaktfläche 41 wird dabei von Flächen mit Mikroabständen zwischen dem Isolierkörper 2 und der Beschichtung 31 durchbrochen.

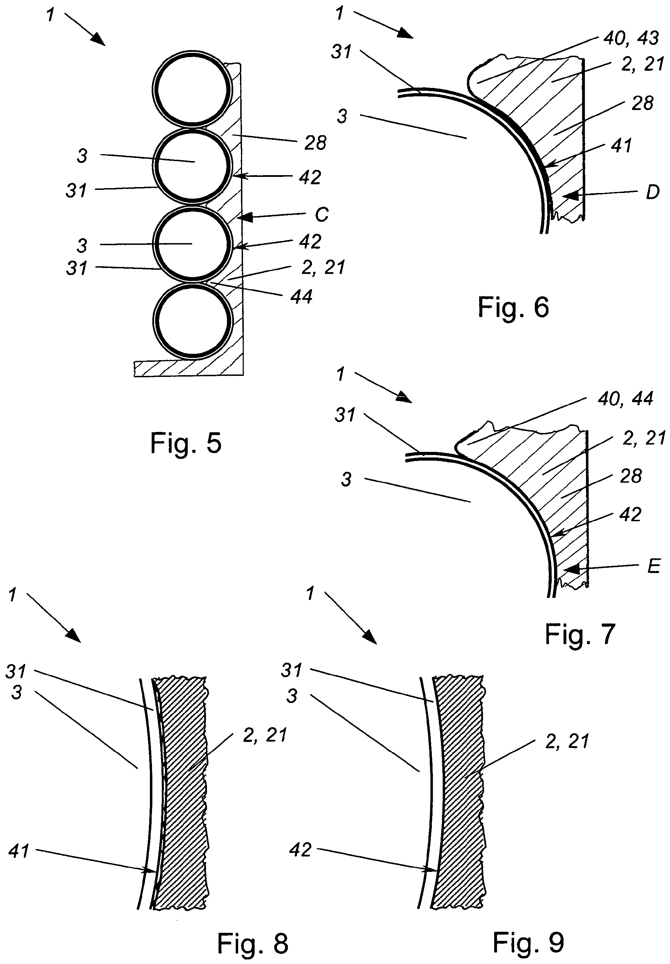

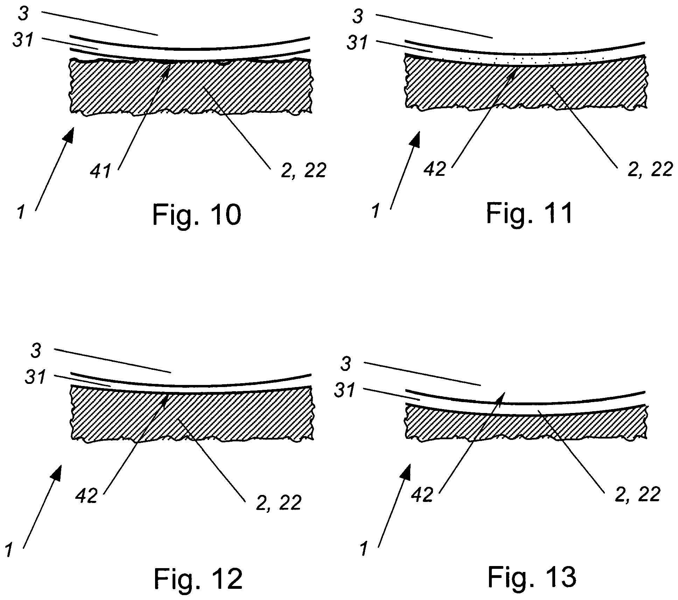

Das lediglich oberflächige Anfliegen der Beschichtung 31 am Isolierkörper 2, und dementsprechend die erste Kontaktfläche 41, ist in unterschiedlicher Vergrößerung in Fig. 4, 6, 8 und 10 dargestellt. In Fig. 4 ist in etwa ein Viertel der in einer Ebene normal zur Frontsicht geschnittenen Spule 1 dargestellt, wobei in etwa ein Viertel des Isolierkörpers 2 dargestellt ist und wobei der Schnitt durch vier Windungen des die Wicklung ausbildenden wenigstens einen Spulendrahtes 3 dargestellt sind. In Fig. 6 ist das Detail B der Spule 1 der Fig. 4 dargestellt. In Fig. 8 ist das Detail D der Spule 1 der Fig. 6 dargestellt. In Fig. 10 ist ein als dünnschichtiges Isoliermedium 22 ausgebildeter weiterer Isolierkörper 2, wobei die Vergrößerung und die Blickrichtung gemäß Fig. 8 ausgebildet ist.

Um den Wärmeübergang vom Spulendraht 3 zum Isolierkörper zu verbessern, also um den derartigen Wärmefluss zu erleichtern, ist erfindungsgemäß vorgesehen, dass zur formschlüssigen Vergrößerung der ersten Kontaktfläche 41 zu einer zweiten Kontaktfläche 42 anschließend an das Wickeln der Wicklung, also zeitlich nachfolgend dem Wickeln des Spulendrahtes 3 der Wicklung, zwischen dem Spulendraht 3 und dem Isolierkörper 2 der feste Isolierkörper 2 wenigstens im Bereich der ersten Kontaktfläche 41 thermisch oder chemisch für eine vorbestimmbare Zeitspanne erweicht wird und die Beschichtung 31 des Spulendrahtes 3 und der Isolierkörper 2 wenigstens zeitweise während dieser vorbestimmbaren Zeitspanne miteinander verpresst werden.

Das Verpressen kann insbesondere im Bereich der Längswandungen 28 des Isolierkörpers 2 erfolgen, womit die Beschichtung 31 und der Isolierkörper 2 im Bereich der Längswandungen 28 des Isolierkörpers 2 miteinander derart verpresst sind, sodass die Beschichtung 31 und der Isolierkörper 2 im Bereich der Längswandungen 28 des Isolierkörpers 2 aneinander haften. Das Verpressen kann insbesondere sowohl im Bereich der Längswandungen 28 als auch der Stirnwandungen 29 des Isolierkörpers 2 erfolgen, womit die Beschichtung 31 und der Isolierkörper 2 sowohl im Bereich der Längswandungen 28 als auch im Bereich der Stirnwandungen 29 des Isolierkörpers 2 miteinander derart verpresst sind, sodass die Beschichtung 31 und der Isolierkörper 2 im Wesentlichen entlang des gesamten Umfangs des Isolierkörpers 2 aneinander haften.

Erweichte Erhebungen der festen Beschichtung 31 und/oder des festen Isolierkörpers 2 werden dabei während des Aneinanderpressens abgeflacht, womit sich entweder eine der beiden Mikrooberflächenstrukturen besser an die andere Mikrooberflächenstruktur anpasst werden können oder wobei sich beide Mikrooberflächenstrukturen zueinander besser anpassen können. Vorteilhaft dabei ist, dass die ersten Mikrokontaktflächen zu zweiten Mikrokontaktflächen vergrößert werden. Eine derart zur zweiten Kontaktfläche 42 vergrößerte erste Kontaktfläche 41 ermöglicht eine Verringerung des Wärmekontaktwiderstandes zwischen dem Spulendraht 3 und dem Isolierkörper 2. Der Wärmeübergang zwischen dem Spulendraht 3 und dem Isolierkörper 2, also die Wärmeleitfähigkeit zwischen dem Spulendraht 3 und dem Isolierkörper 2, ist dabei indirekt proportional zum Wärmekontaktwiderstand und wird somit verbessert, ohne dass der Isolierkörper 2 und der Spulendraht 3 mittels einem weiteren Stoff wie Tränk- oder Vergussharz vergossen werden muss. In überraschender Weise hat sich dabei gezeigt, dass der Wärmeübertrag dabei noch besser als bei mit einem Tränk- und Vergussharz vergossenen Spule ist. Möglicherweise ist dies darauf zurück zu führen, dass der Weg, welchen die Wärme vom Spulendraht zum Isolierkörper 2 zurücklegen erfindungsgemäß besonders kurz ist und/oder dass anstatt Wärmeübergangs vom Spulendraht 3 auf das Tränk- und Vergussharz und vom Tränk- und Vergussharz auf den Isolierkörper 2 der Wärmeübergang vom Spulendraht 3 unmittelbar auf den Isolierkörper 2 erfolgt.

Insbesondere können mehrere voneinander beabstandete erste Mikrokontaktflächen dabei zusammenwachsen. Im Idealfall können sämtliche erste Mikrokontaktflächen derart zusammenwachsen, sodass die derart ausgebildete zweite Kontaktfläche 42 durchgängig, insbesondere vollflächig und im Wesentlichen durchbrechungsfrei, ausgebildet ist. Vorteilhaft dabei ist weiters, dass - sofern zwischen den zweiten Mikrokontaktfläche weiterhin Abstandsbereiche ausgebildet sind - in diesen Abstandsbereichen die mittlern Mikroabstände zwischen dem Isolierkörper 2 und der Beschichtung 31 kleiner als die mittleren Mikroabstände in den Abstandsbereichen zwischen den ersten Mikrokontaktflächen ausgebildet sind. Diese gegebenenfalls verbleibenden, jedoch verringerten Mikroabstände nach dem Verfahrensschritt des Erweichens der festen Beschichtung 31 und/oder des feste Isolierkörpers 2 tragen auch zur Verbesserung des Wärmeübergangs und zur Erhöhung des Wärmeflusses bei gleicher Temperaturdifferenz zwischen dem Spulendraht 3 und dem Isolierkörper 2 bei.

Die Spule 1 und Details der Spule 1 nach dem durchgeführten Verfahrensschritt des Erweichens und des Aneinanderpressens ist in Fig. 5, 7, 9 sowie 11 bis 13 dargestellt, wobei in diesen Fig. schematisch die zweite Kontaktfläche 42 dargestellt ist.

Vorteilhaft bei der erfindungsgemäßen chemischen oder thermischen Weiterbehandlung gemäß dem erfindungsgemäßen Verfahren ist, dass auf zusätzliche Maßnahmen und/oder Mittel zur Verbesserung des Wärmeüberganges zwischen dem Spulendraht 3 und dem Isolierkörper 2 verzichtet werden kann und dennoch ein niedriger Wärmekontaktwiderstand zwischen dem Spulendraht 3 und dem Isolierkörper 2 gewährleistet werden kann. Beispielsweise kann darauf verzichtet werden, dass die fertig gewickelte Spule 1 vergossen wird, wobei darauf verzichtet wird, dass eine Vergussmasse die verbliebenen Holräume, Abstände und Mikroabstände befüllt. Dass herkömmlich zur Verbesserung des Wärmeüberganges zwischen Wicklung und Isolierkörper 2 durchgeführte Vergießen ist dabei ein aufwendiger und teurer Arbeitsschritt. Vorteilhaft bei gegenständlicher Erfindung ist, dass mittels des gegenständlichen Verfahrens eine - im Vergleich mit der vergossenen Spule - vergleichbare oder höhere Wärmeleitfähigkeit vom Spulendraht 3 auf den Isolierkörper 2 erzielt werden kann, jedoch das Verfahren wesentlich, schneller, einfacher und günstiger durchgeführt werden kann. Insbesondere eignet sich die vorteilhafte Spule 1 dabei für den Einsatz im Hochleistungsbereich, also in jenem Arbeitseinsatz, in welchem hohe Ströme auf kleinem Volumen fließen, beispielsweise bei Elektromotoren, also bei der Umwandlung von Strom zu einer Drehbewegung, oder bei Generatoren, also bei der Umwandlung von einer Drehbewegung in Strom, insbesondere bei Fahrzeugen, insbesondere Automobilen, Zügen, Flugzeugen und Schiffen, bevorzugt bei Hybridfahrzeugen sowie bei Stromgeneratoren, beispielsweise in Windrädern.

Insbesondere kann vorgesehen sein, dass mittels des Erweichens der festen Beschichtung 31 des Spulendrahtes 3 und/oder des festen Isolierkörpers 2 die Beschichtung 31 des Spulendrahtes 3 unmittelbar mit dem Isolierkörper 2 haftend verbunden wird. Derart kann gewährleistet werden, dass die Beschichtung 31 an einer zweiten Kontaktfläche 42 unmittelbar an dem Isolierkörper 3 haftet. Die Haftung wird dabei lediglich durch die gegenseitige Anpassung der ersten Mikrooberflächenstruktur zur zweiten Mikrooberflächenstruktur erzielt, wobei Erhöhungen der ersten Mikrooberflächenstruktur in die zweite Mikrooberflächenstruktur eindringen und/oder wobei Erhöhungen der zweiten Mikrooberflächenstruktur in die erste Mikrooberflächenstruktur eindringen. Derart "verzahnen" bzw. "verflechten" die erste Mikrooberflächenstruktur und die zweite Mikrooberflächenstruktur miteinander und Wärmedehnungen des Isolierkörpers 2 und des Spulendrahtes 3 können an der zweiten Kontaktfläche 42 gut übertragen werden. Diese gegenseitige Anpassung der Mikrooberflächenstrukturen, insbesondere das "Verzahnen" bzw. "Verflechten", stellt eine mikroplastische Verformung der zur mikroplastischen Verformbarkeit erweichten Beschichtung 31 und/oder des zur mikroplastischen Verformbarkeit erweichten Isolierkörpers 2 dar.

Vorteilhaft dabei ist, dass der Spulendraht 3 derart dauerhaft am Isolierkörper 2 haftet, dass Spulendraht 3 und Isolierkörper 2 an der zweiten Kontaktfläche 42 zueinander nicht verrutschen, insbesondere sich nicht voneinander ablösen, auch wenn die Spule 1 abwechselnd erwärmt und abgekühlt, also einem wechselnden Wärmezyklus unterzogen wird. Vorteilhaft dabei ist, dass die hohe Wärmeleitung zwischen Spulendraht 3 und Isolierkörper 2 dauerhaft gewährleistet werden kann und derart eine hohe Dauerstandsfestigkeit der Spule 1 an sich sowie der Eigenschaften der Spule 1 gewährleistet werden kann. Im Gegensatz dazu ist bei herkömmlichen Spulen 1 nachteilig, dass Spulendraht 3 und dem Isolierkörper 2 wenig aneinander haften, wobei sicher der Spulendraht 1 nach einer bestimmten Anzahl von Wärmezyklen, welche Anzahl zwischen 100 und 10000 Zyklen betragen kann, geringfügig vom Isolierkörper 2 ablöst, womit der Wärmekontaktwiderstand zwischen Spulendraht 1 und Isolierkörper 2 stark ansteigt. Wenn erfindungsgemäß die Beschichtung 31 des Spulendrahtes 3 unmittelbar mit dem Isolierkörper 2 haftend verbunden wird, kann diese Anzahl von Wärmezyklen um den Faktor 10 bis 20 erhöht werden, womit gewährleistet werden kann, dass die Spule 1 eine größer Dauerstandsfestigkeit aufweist, als das Fahrzeug oder die Anlage in welcher die Spule 1 verbaut wird.

Der Isolierkörper 2 kann - wie in Fig. 1 bis 9 dargestellt - als Spulenkörper 21 ausgebildet sein. Der Spulenkörper 21 ist dabei ein dreidimensional vorgeformter Körper, welcher üblicherweise aus einem Thermoplast, Duroplast und/oder Kompositwerkstoff ausgebildet ist. Insbesondere kann der Spulenkörper 21 als Thermoplastkörper oder als Duroplastkörper ausgebildet sein. Bevorzugt kann hiebei vorgesehen sein, dass die Beschichtung 31 unmittelbar am Spulenkörper 21 haftet. Oftmals werden die Spulenkörper 21 im Spritzguss hergestellt, womit der Spulenkörper 21 kostengünstig in großen Stückzahlen herstellbar ist. Weil der Spulenkörper 21 geeignet ist, die Wicklung selbsttragend zu tragen, ist auch die Bezeichnung Wicklungsträger für den Spulenkörper 21 bekannt.

Der Spulenkörper 21 ist zur Anordnung an einem Polzahn 5 vorgesehen, wobei der Spulenkörper 21 zum Umschließen eines Hauptkörpers 51 des Polzahns 5 vorgesehen ist. Der umwickelte Polzahn 5 bildet dabei einen umwickelten Statorzahn aus, welcher im weiteren kurz als Statorzahn bezeichnet wird. Wenn der Polzahn 5 wicklungsfrei im Stator angeordnet ist, kann der Polzahn 5 einen wicklungsfreien Statorzahn ausbilden.

In Frontsicht auf den Polzahn 5 gesehen wird die am Polzahn 5 angeordnete Spule 1 nach oben hin von einem Polkopf 53 des Polzahns 5 abgeschlossen und nach unten hin von einem Polschuh 52 des Polzahns 5 abgeschlossen. Insbesondere kann vorgesehen sein, dass der Spulenkörper 21 am Polzahn 5 angeordnet wird, bevor der Spulenkörper 21 bewickelt wird, womit zeitgleich Polzahn 5 und Spulenkörper 21 bewickelt werden. Vorteilhaft dabei ist, dass der Polzahn 5 einstückig ausgebildet sein kann, wobei Polschuh 52, Hauptkörper 51, und Polkopf 53 voneinander untrennbar vorgesehen sind. Vorteilhaft dabei ist, dass der Polzahn 5 dabei kostengünstig vorfabriziert werden kann.

In diesem Zusammenhang kann vorgesehen sein, dass die Spule 1 vorgefertigt ist und vorgefertigt auf den Hauptkörper 51 des Polzahns 5 aufgeschoben wird. Dabei ist vorteilhaft, dass dabei der Wärmeübergang wenigstens vom Spulendraht 3 bis zum Kontakt zwischen dem Spulenkörper 21 und dem Polzahn 5 optimiert sein kann. Hiebei kann vorgesehen sein, dass eine zum Polzahn 5 gerichtete Innenfläche des Spulenkörper 21 konisch gestaltet sein kann, wobei der Spulenkörper 21 selbsttätig mit vorbestimmbarer Anpresskraft am Polzahn 5 anliegen kann. Vorteilhaft dabei ist, dass auch der Wärmeübergang vom Spulenkörper 21 auf den Polzahn 5 dauerhaft optimiert sein kann.

Der Isolierkörper 2 kann in vorteilhafter anderer Ausgestaltung der Spule 1 ein dünnschichtiges Isoliermedium 22 umfassen. Dieses dünnschichtige Isoliermedium 22 kann beispielsweise auf den Spulenkörper 21 aufgespritzt sein.

Bei einer weiteren vorteilhaften Ausführungsform der Spule 1 kann vorgesehen sein, dass der Isolierkörper 2 als das dünnschichtige Isoliermedium 22 ausgebildet ist, wie dies in Fig. 10 bis 13 schematisch dargestellt ist. Dabei ist vorgesehen, dass das dünnschichtige Isoliermedium 22 direkt am den Polzahn 5 zum Spulendraht 3 isoliert und wenigstens bereichsweise kein als Spulenkörper 21 ausgebildeter Isolierkörper 2 zwischen dem Spulendraht 3 und dem Polzahn 5 angeordnet ist.

Bei einer weiteren vorteilhaften Ausführungsform der Erfindung kann vorgesehen sein, dass der Isolierkörper 2 mehrteilig ausgebildet ist. Insbesondere kann dabei vorgesehen sein, dass der Isolierkörper 2 bereichsweise das dünnschichtige Isoliermedium 22 umfasst und bereichsweise den Spulenkörper 21 umfasst. In diesem Zusammenhang kann insbesondere vorgesehen sein, dass jeweils ein Spulenkörper 21 entlang der Stirnseiten des Polzahns 5 angeordnet ist, und dass der entlang der Längsrichtung 19 an zwei Flächen des Polzahns 5, welche in diesem Sinne als Längsflächen des Hauptkörpers 51 des Polzahns 5 bezeichnet werden können, jeweils wenigstens eines der dünnschichtigen Isoliermedien 22 angeordnet ist. Vorteilhaft dabei ist, dass der Spulendraht 3 im Bereich der Stirnflächen des Polzahns 5 zuverlässig geführt werden kann und im Bereich der Längsflächen der Wärmeübergang vom Spulendraht 3 zum Polzahn 5 besonders gut ausgebildet sein kann, womit eine besonders große Wärmeleistung aus dem Spulendraht 3, damit aus den Wicklungen und damit auf die Polzähne 5 übertragen werden kann. Die Polzähne 5 können einfach und effektiv gekühlt werden, womit insgesamt eine hohe Wärmeleistung aus der Stator abgeleitet werden kann und der Stator für Hochleistungselektromaschinen vorgesehen sein kann und/oder besonders kompakt ausgebildet werden kann.

Vorteilhaft dabei ist weiters, dass der Polzahn 5 derart besonders einfach und kostengünstig bewickelt werden kann.

Das dünnschichtige Isoliermedium 22 kann insbesondere als Isolierfolie und/oder als Isolierpapier ausgebildet sein. Die Isolierfolie ist in diesem Zusammenhang eine Folie, welche ein Polymer, also einen Kunststoff, umfasst, und kann auch als Kompositfolie ausgebildet sein. Das Isolierpapier umfasst dabei Zellulose oder zelluloseähnliche Grundstoff, beispielsweise zellstoffreie Papiere.

Der Isolierkörper 2 ist als elektrische Isolierung des Spulendrahtes 3 gegenüber dem Polzahn 5 vorgesehen. Gemeinsam haben Spulenkörper 21 und dünnschichtiges Isoliermedium 22, dass diese chemisch und/oder thermisch erweicht werden können, jedoch bei Betriebstemperaturen der Spule 1, welche üblicherweise zwischen -40°C und 160°C, bevorzugt zwischen -20°C und 130°C, sowie bei Betriebsumgebungstemperaturen zwischen -50°C und 150°C, bevorzugt zwischen -30°C und 100°C, liegen fest sind und sich im Betriebszustand der Spule 1 plastisch im Wesentlichen nicht verformen. In diesem Sinne wird der Isolierkörper als fester Isolierkörpers 2 bezeichnet.

Das dünnschichtige Isoliermedium 22, insbesondere das Isolierpapier und/oder die Isolierfolie, kann mit einem Haftkleber beschichtet sein, wobei die Haftkraft zwischen Beschichtung 31 und dem dünnschichtigen Isoliermedium 22 erhöht wird.

Das dünnschichtige Isoliermedium 22 kann in vorteilhafter Weise in an den Polzahn 5 angepasster Geometrie vorgeformt sein und wird bei der Herstellung der Spule auf und bereichsweise um den Polzahn 5 gelegt. Dabei wird bei der Herstellung der Spule 1 gleichzeitig der Polzahn 5 und das dünnschichtige Isoliermedium 22 bewickelt. Vorteilhaft dabei ist, dass der Polzahn 5 einstückig ausgebildet sein kann, wobei Polschuh 52, Hauptkörper 51, und Polkopf 53 voneinander untrennbar vorgesehen sind. Vorteilhaft dabei ist, dass der Polzahn 5 dabei kostengünstig vorfabriziert werden kann.

Die Beschichtung 31 des Spulendrahtes 3 ist üblicherweise als elektrische Isolationsschicht vorgesehen, welche elektrische Isolationsschicht die einzelnen Windungen gegeneinander isoliert. Bekannte Beschichtungen 31 können als Kunststoff, als Lack oder als ausgebildet sein. Der Lack, insbesondere der Backlack, kann mehrschichtig ausgebildet sein. Der Backlack umfasst wenigstens eine Grundlackschicht und eine Klebelackschicht.

Gemeinsam haben diese Typen der Beschichtung 31, dass diese Typen chemisch und/oder thermisch erweicht werden können, jedoch bei den oben genannten Betriebstemperaturen bzw. Betriebsumgebungstemperaturen der Spule 1 fest sind und sich im Betriebszustand der Spule 1 plastisch im Wesentlichen nicht verformen. In diesem Sinne wird die Beschichtung 31 als feste Beschichtung 31 bezeichnet.

Die Spule 1 kann manuell oder - bevorzugt - maschinell gewickelt werden. Maschinell kann die Spule 1 insbesondere in einer Wickelmaschine gewickelt werden. Dabei kann insbesondere der Polzahn 5 in die Wickelmaschine eingelegt werden und zeitgleich mit dem Isolierkörper 2 bewickelt werden.

Zum miteinander Verpressen der Beschichtung 31 und des Spulendrahtes 3 kann in vorteilhafter Weise vorgesehen sein, dass die Wicklung wenigstens zeitweise während des Erweichens der Beschichtung 31 des Spulendrahtes 3 und/oder des Isolierkörpers 2 an den Isolierkörper 2 angepresst wird. Durch den derart ausgeübten Druck auf den erweichten den Isolierkörper 2 bzw. die erweichte Beschichtung 31 kann der Werkstoff des Isolierkörpers 2 bzw. die Beschichtung 31 stellenweise dem Druck ausweichend abfließen. Dieses Abfließen des jeweilig erweichten Werkstoffes ist schematisch in Fig. 5, 7, 12 und 13 dargestellt, wobei Material von der Ausgangsmenge 43 abfließt und im selben Bereich der Spule 1 nach dem Abfließen die Verdrängungsmenge 44 ausgebildet ist.

Der Druck zum Verpressen kann insbesondere mittels wenigstens einen Stempel aufgebracht werden. In vorteilhafter Ausbildung des Stempels kann dieser eine bereichsweise zur Außenkontur der Wicklung der Spule 1 passende Stempelfläche aufweisen, womit der Druck entlang der Stempelfläche gleichmäßig auf die Spule aufgebracht werden kann.

Insbesondere kann der Stempel in Richtung zur Längswandung 28 und Wesentlichen normal auf die Längswandung 28 des Isolierkörper 2 Druck ausbilden, sodass im Bereich dieser Längswandung 28 die Beschichtung 31 des Spulendrahtes 3 und der Isolierkörpers 2 gleichmäßig miteinander verpresst werden. Insbesondere können zwei einander gegenüberliegende Stempel gleichzeitig Druck in Richtung zu den Längswandungen 28 und Wesentlichen normal auf die Längswandungen 28 des Isolierkörper 2 ausbilden, sodass im Bereich beider Längswandungen 28 die Beschichtung 31 und der Isolierkörpers 2 gleichmäßig miteinander verpresst werden.

In vorteilhafter Weiterbildung kann vorgesehen sein, dass der Stempel in Richtung zur Stirnwandung 29 und Wesentlichen normal auf die Stirnwandung 29 des Isolierkörper 2 Druck ausbildet. Insbesondere können zwei einander gegenüberliegende Stempel gleichzeitig Druck in Richtung zu den Stirnwandungen 29 ausbilden.

Das stellenweise Abfließen des Werkstoffes wird im Vergleich von Fig. 6 und 7 deutlich: Wenn der Spulendraht 3 bereichsweise in den Isolierkörper 2 einsinkt, dann verdrängt er Werkstoff des hiebei als Spulenkörper 21 ausgebildeten Isolierkörpers 2. Da der Werkstoff - sofern der Isolierkörper 2 am Polzahn 5 angeordnet ist - kann der verdrängte Werkstoff lediglich in einen Zwischenraum 40 zwischen zwei benachbarten Spulendrähten 3 einer untersten Wickellage der Wicklung abfließen. Dabei vermehrt sich der im Zwischenraum 40 angeordnete Werkstoff des Isolierkörpers 2 von einer Ausgangsmenge 43 zu einer höheren Verdrängungsmenge 44. Hiebei kann sich auch der Mittelpunkt des Spulendrahtes 3 näher in Richtung des Isolierkörpers 2 verschieben, wobei - entlang des Umfangs des Spulendrahtes 3 gesehen - mehr Spulendrahtumfang, den Isolierkörpers berührt als dies ohne einem Erweichen der Fall ist. Vorteilhaft dabei ist, dass sich auch die Außenkontur der Kontaktfläche von einer ersten Außenkontur der ersten Kontaktfläche 41 zu einer zweiten Außenkontur der zweiten Kontaktfläche 42 verschiebt, wobei die zweite Kontaktfläche 42 sich ebenfalls gegenüber der ersten Kontaktfläche 41 vergrößert. Entlang des Umfangs des Spulendrahtes 3 verbreitert sich dabei der Kontakt zwischen Spulendraht 3 und Isolierkörper 2, wobei die zweite Kontaktfläche 42 pro Windung des Spulendrahtes 3 breiter als die erste Kontaktfläche 41 pro Windung des Spulendrahtes 3 ausgebildet ist.

Zur Unterscheidbarkeit zur weiter oben beschriebenen mikroplastischen Verformbarkeit kann hiebei von plastischer Verformbarkeit bzw. makroplastischer Verformbarkeit gesprochen werden. Bei Auftreten der plastischen Verformbarkeit tritt üblicherweise auch die mikroplastische Verformbarkeit auf. Vorteilhaft dabei ist, dass bei der plastischen Verformbarkeit der Beschichtung 31 und/oder des Isolierkörpers 2 unvermeidbare Fertigungstoleranzen zwischen dem Spulendraht 3 und dem Isolierkörper 2, insbesondere dem gegebenenfalls wenigstens eine Rinne 18 aufweisenden Spulenkörper 21, ausgeglichen werden, womit ebenfalls die Wärmeleitfähigkeit zwischen Beschichtung 31 und Isolierkörper 2 besonders hoch ausgebildet sein kann.

Wenn im Zwischenraum 40 eine höhere Verdrängungsmenge 44 des Isolierkörpers 2 als die Ausgangsmenge 43 im Zwischenraum 40 angeordnet ist kann hiebei auch vom einschmelzen des Spulendrahtes 3 in den Isolierkörper 2 gesprochen werden, da hiebei der Spulendraht 3 - relativ gesehen - tiefer in den Isolierkörper 2 einsinkt. Vorteilhaft dabei ist, dass das Einschmelzen des Spulendrahtes 3 mit geringem Aufwand und hoher Prozesssicherheit erfolgen kann.

Vorteilhaft dabei ist weiters, wie die dies im schematisch dargestellten Querschnitt erkennbar ist, dass bei ausgebildeter zweiter Kontaktfläche 42 mehr Umfang des Spulendrahtes 3 in Kontakt mit dem Isolierkörper 2 steht als bei ausgebildeter erster Kontaktfläche 41. Vorteilhaft dabei ist, dass auch dadurch der Wärmeübergang zwischen dem Spulendraht 3 und dem Isolierkörper 2 ebenfalls weiter verbessert wird. In diesem Zusammenhang kann in Weiterbildung vorgesehen sein, dass zusätzlich die Beschichtung 31 bereichsweise abfließt, wie dies schematisch in Fig. 12 dargestellt ist, wobei die Beschichtung 31 bereichsweise dünner wird, womit die Beschichtung 31 im Bereich des Isolierkörper 2 dünner ist als in Bereiche der Beschichtung 31, welche beabstandet zum Isolierkörper 2 entlang des Umfangs des Spulendrahtes 3 angeordnet sind. Dadurch dass die Beschichtung 31 im Bereich des Isolierkörper 2 dünner ist, kann der Wärmeübergang zwischen dem zum Isolierkörper 2 benachbarten Spulendraht 3 und dem Isolierkörper 2 besonders gut ausgebildet sein.

In Zusammenhang mit dem dünnschichtige Isoliermedium 22 kann entweder lediglich die Beschichtung 31 erweicht werden und abfließen, wie dies schematisch in Fig. 12 dargestellt ist, oder lediglich das dünnschichtige Isoliermedium 22 erweicht werden und abfließen, wie dies schematisch in Fig. 13 dargestellt ist, oder eine Kombination aus beiden Effekten vorgesehen sein. Auch hiebei verbreitert sich der Kontakt von der schmalen bzw. linienförmigen ersten Kontaktfläche 41 zur breiten bzw. bandförmigen zweiten Kontaktfläche 42, wobei ebenfalls üblicherweise eine mikroplastische Verformung entweder in der Beschichtung 31 oder im dünnschichtigen Isoliermedium 22 auftritt. Das bereichsweise - dem Druck nachgebende - Abfließen des dünnschichtigen Isoliermediums 22 ist schematisch durch das "dünner werden" des dünnschichtigen Isoliermediums 22 in Fig. 13 dargestellt.

In vorteilhafter Weiterbildung kann vorgesehen sein, dass die Beschichtung 31 und der Isolierkörper 2 im zweiten Kontaktbereich 42 teilweise ineinandergeflossen sind, wie dies in Fig. 11 schematisch dargestellt ist. Insbesondere kann dies der Fall sein, wenn der Isolierkörper 2 im Bereich der zweiten Kontaktfläche 42 zur Aufnahme einer erweichten Beschichtung 31 ausgebildet ist, beispielsweise schwammartig, fasrig, porös oder offenporig ausgebildet ist. Bevorzugt kann dies der Fall sein, wenn der zweite Isolierkörper 2 zumindest im Bereich der zweiten Kontaktfläche 42 als Isolierpapier ausgebildet ist, wobei die erweichte Beschichtung 31 bereichsweise in das Isolierpapier einfließen kann, womit das Isolierpapier - im Anschluss an den an das Wicklen anschließenden Verfahrensschritt - mit der Beschichtung 31 getränkt ist. Dies ermöglicht die besonders feste Haftung des Spulendrahtes 3 am Isolierpapier und derart am Isolierkörper 2 und die besonders gute Wärmeleitung zwischen Spulendraht 3 und Isolierkörper 2 in diesem Bereich.

Dass stellenweise Einfließen der Beschichtung 31 in den Isolierkörper 2 kann dabei auch kombiniert werden mit dem bereichsweisen Abfließen von der Beschichtung 31 und/oder des Isolierkörpers 2 bzw. dem teilweisen gegenseitigen Ausgleichen der ersten Mikrooberflächenstruktur und/oder der zweiten Mikrooberflächenstruktur.

In diesem Sinne - und zur besseren Unterscheidbarkeit zur mikroplastischen Verformung und der plastischen Verformung - können das stellenweise Einfließen der Beschichtung 31 in den Isolierkörper 2 und das stellenweise Einfließen des Isolierkörpers 2 in die Beschichtung 31 als Fließverformung bezeichnet werden, wobei der dabei fließfähige der beiden Werkstoffen zur Fließverformbarkeit erweicht ist.

Um wenigstens einzelne der unterschiedlichen erweichungsbedingten Effekte möglichst gleichzeitig zu ermöglichen, können die Beschichtung 31 und der Isolierkörper 2 derart gewählt werden, dass diese chemisch oder thermisch in etwa gleichartig, also unter Einwirkung desselben chemischen Lösungsmittels bzw. bei in etwa derselben Temperatur, erweichen.

In diesem Zusammenhang kann insbesondere vorgesehen sein, dass der Werkstoff der Beschichtung 31 und der Werkstoff der Isolierkörper 2 im Bereich der ersten bzw. der zweiten Kontaktfläche 41, 42 im Wesentlichen derselbe Werkstoff sind. Nach dem Prozessschritt des Erweichens können derart der Spulendraht 3 und der Isolierkörper 2 einstückig miteinander ausgebildet sein oder zumindest im an der zweiten Kontaktfläche 42 miteinander verschweißt sein.

Beispielsweise können Beschichtung 31 und Isolierkörper 2 aus Polypropylen PP ausgebildet sein, welches eine Gebrauchstemperatur, bis zu welcher das Polypropylen fest ist, von 110°C aufweist, ab ca. 130°C kontinuierlich erweicht und bei ca. 160°C mittels Kristallit-Schmelzens schmilzt. Zum gegenseitigen Erweichen der Beschichtung 31 und des Isolierkörpers 2 Polypropylen sind diese hiebei im ersten Kontaktbereich kurzzeitig auf zwischen 130°C bis 160°C zu erhitzen.

Bei einem Erhitzen auf in etwa 130°C gleichen sich dabei im Wesentlichen lediglich die erste Mikrooberfläche und die zweite Mikrooberfläche aneinander an. Dabei ergibt sich eine leichte Haftung zwischen dem Spulendraht 3 und dem Isolierkörper 2, wobei der Spulendraht 3 entlang dessen Längserstreckung zwar schwer entlang des Isolierkörpers 2 verschoben werden kann, jedoch in Richtung normal vom Isolierkörper 2 mit geringem Kraftaufwand abgehoben werden kann, wobei eine Beschädigung von Isolierkörper 2 und/oder Beschichtung 31 nur selten auftritt.

Bei einem Erhitzen auf in etwa 150°C gleichen sich dabei die erste Mikrooberflächenstruktur und die zweite Mikrooberflächenstruktur aneinander an und es die Beschichtung 31 und der Isolierkörper 2 fließt stellenweise ab, sodass auch die ersten Außenkonturen zu den zweiten Außenkonturen hin verschoben werden und sich die höhere Verdrängungsmenge 44 im Zwischenraum 40 ansammelt. Dabei ergibt sich eine mittelstarke Haftung zwischen dem Spulendraht 3 und dem Isolierkörper 2, wobei der Spulendraht 3 entlang dessen Längserstreckung am Isolierkörper 2 nicht verschoben werden kann, jedoch in Richtung normal vom Isolierkörper 2 mit Kraftaufwand abgehoben werden kann, wobei eine Beschädigung von Isolierkörper 2 und/oder Beschichtung 31 oftmals auftritt.

Bei einem Erhitzen auf in etwa 170°C verschmelzen die Beschichtung 31 und der Isolationskörper 2 bereichsweise miteinander, wobei die Beschichtung 31 und der Isolationskörper 2 ineinander fließen und miteinander verschmolzen sind. Dabei ergibt sich eine starke Haftung zwischen dem Spulendraht 3 und dem Isolierkörper 2, wobei Spulendraht 3 und Isolationskörper 2 miteinander verschweißt sind. Dabei kann der Spulendraht 3 auch in Richtung normal vom Isolierkörper 2 nur mit erheblichen Kraftaufwand abgehoben werden kann, wobei der Isolierkörper 2 und/oder die Beschichtung 31 zerstört wird.

In diesem Sinne kann der Isolierkörper 2 einen technischen Kunststoffe umfassen, insbesondere aus einem technischen Kunststoff gefertigt sein, wobei beim technischen Kunststoff der Erweichungspunkt bis zu 230°C betragen kann.

Erfindungsgemäß ist vorgesehen, dass lediglich einer der beiden Werkstoffe, welche jeweils die Beschichtung 31 und den Isolierkörper 2 ausbilden, erweicht wird. Dies ist erfindungsgemäß der Fall, wenn der chemische bzw. der thermische Erweichungspunkt lediglich des Isolierkörpers 2 erreicht ist. Als nicht erfindungsgemäßes Beispiel hiefür sind als Beschichtung 31 der Backlack und als Isolierkörper 2 das Isolierpapier erwähnt. Das Isolierpapier weist keinen thermischen Erweichungspunkt auf. Handelsüblicher Backlack erweicht dabei - je nach Sorte - bei 150°C bis 190°C, wobei das Isolierpapier bei dieser Temperatur fest ist, und ist unterhalb dieser Temperaturen fest.

Wenn die Beschichtung 31 lediglich auf die Erweichungstemperatur erhitzt wird, dann verformt sich die Beschichtung im Wesentlichen lediglich mikroplastisch, womit sich im Wesentlichen lediglich die erste Mikrooberflächenstruktur des Backlacks an die - dabei im Wesentlichen unveränderte - zweite Mikrooberflächenstruktur des Isolierpapiers angleicht. Dabei ergibt sich eine leichte Haftung zwischen dem Spulendraht 3 und dem Isolierpapier, wobei der Spulendraht 3 entlang dessen Längserstreckung zwar schwer entlang des Isolierpapiers verschoben werden kann, jedoch in Richtung normal vom Isolierpapier mit geringem Kraftaufwand abgehoben werden kann.

Wenn die Beschichtung 31 über die Erweichungstemperatur erhitzt wird, beispielsweise um 10°C, ist der Backlack leichter fließfähig und verformt sich auch makroskopisch leichter. Der erweichte Backlack passt sich dabei sowohl mikroskopisch als auch makroskopisch besser an das Isolierpapier an, die Beschichtung 31 wird bereichsweise dünner und der den Isolierkörper 2 kontaktierende Umfangsbereich des Spulendrahtes 2 wird größer. Dies ist schematisch in Fig. 12 dargestellt. Dabei ergibt sich eine mittlere Haftung zwischen dem Spulendraht 3 und dem Isolierpapier, wobei der Spulendraht 3 entlang dessen Längserstreckung am Isolierpapier nicht verschoben werden kann, jedoch in Richtung normal vom Isolierpapier mit Kraftaufwand abgehoben werden kann.

Wenn der Backlack ausreichend flüssig ist, beispielsweise 15°C über dessen Erweichungspunkt erwärmt wird, kann dieser zusätzlich bereichsweise in das Isolierpapier einfließen, wie dies schematisch in Fig. 11 dargestellt ist. Dabei ergibt sich eine starke Haftung zwischen dem Spulendraht 3 und dem Isolierpapier, wobei Spulendraht 3 und Isolationskörper 2 miteinander verschweißt sind. Dabei kann der Spulendraht 3 auch in Richtung normal vom Isolierpapier nur mit erheblichem Kraftaufwand abgehoben werden, wobei die elektrische Isolierung von Isolierpapier und/oder Beschichtung 31 dauerhaft beeinträchtigt werden kann.

In den drei letztgenannten Ausführungsformen der Spule ist vorgesehen, dass der Backlack unmittelbar am dünnschichtigen Isoliermedium 22 haftet, wobei die Haftung mit unterschiedlicher Stärke - von leicht bis stark - ausgebildet ist.

In vorteilhafter Weiterbildung des Verfahrens kann vorgesehen sein, dass die Beschichtung 31 des Spulendrahtes 3 und/oder der Isolierkörper 2 mittels eines Stromflusses einer vorbestimmbaren Stromstärke durch den Spulendraht 3 auf eine Temperatur zum thermoplastischen Formen erhitzt wird. Dabei wird die Wicklung insbesondere im Bereich der ersten Kontaktfläche 41 auf die Temperatur zum thermoplastischen Formen erhitzt. Dieser Verfahrensschritt ist in vorteilhafter Weise zügig und kostengünstig durchführbar. Vorteilhafterweise kann dabei gleichzeitig eine Funktionsprüfung der Spule erfolgen.

In vorteilhafter Weiterbildung des Verfahrens kann vorgesehen sein, dass die Spule 1 in einem Heizofen erhitzt wird, insbesondere im Wesentlichen durchgängig erhitzt wird. Vorteilhaft dabei ist, dass die Spule 1 derart gleichmäßig und spannungsarm erhitzt werden kann.

Nach dem Erhitzen kann die Spule 1 in eine Presse eingelegt werden und in der Presse können die Beschichtung 31 des Spulendrahtes 3 und der Isolierkörper 2 wenigstens zeitweise während dieser vorbestimmbaren Zeitspanne miteinander verpresst werden. Insbesondere kann die Spule 1 aus dem Ofen entnommen werden und in die Presse eingelegt werden. In vorteilhafter Weise kann dabei vorgesehen sein, dass die erweichte Beschichtung 31 des Spulendrahtes 3 und/oder der erweichte Isolierkörper 2 in der Presse erstarren, insbesondere wiedererstarren, kann, wozu die Spule 1 für eine ausreichend lange Abkühldauer in der Presse belassen und anschließend aus der Presse genommen wird.

In diesem Zusammenhang kann insbesondere vorgesehen sein, dass die hiezu als Backlack ausgebildete Beschichtung 31 des Spulendrahtes 3 im Bereich der ersten Kontaktfläche 41 und in weiteren Bereichen der Beschichtung 31 des Spulendrahtes 3 auf die Temperatur zum thermoplastischen Formen erhitzt wird, wobei als Temperatur eine Backtemperatur des Backlacks gewählt wird, und wobei die Wicklung verbacken und der Backlacks an den Isolierkörper 2 angebacken wird. Ein derartiger Verfahrensschritt wird üblicherweise als Verbacken der Spule 1 bezeichnet.

Im Unterschied zur vorstehend beschriebenen thermischen Aktivierung, also der thermischen Erweichung, der ersten Kontaktfläche 41 kann diese alternativ oder zusätzlich chemisch aktiviert werden. Dazu kann ein Lösungsmittel in die Spule 1 eingebracht werden, welches Lösungsmittel die Beschichtung 31 und/oder den Isolierkörper 2 kurzzeitig erweicht und nach Verbrauch des Lösungsmittels, welche innerhalb einer vorgebbaren Zeitspanne verdampfen kann, kann die derart erweichten Bereiche der Beschichtung 31 und/oder des Isolierkörpers wiederum erstarren. Beispielsweise kann eine als Lackbeschichtung ausgebildete Beschichtung 31 des Spulendrahtes 3 derart erweicht werden. Auch hiebei kann die Spule 1 in die Presse zum Verpressen der Beschichtung 31 des Spulendrahtes 3 mit dem Isolierkörper 2 eingelegt werden und solange in der Presse in einem gepressten Zustand verweilen, bis die erweichten Bereiche der Spule 1 wieder erstarrt sind.

Insbesondere kann in diesem Zusammenhang vorgesehen sein, dass das Lösungsmittel erst unmittelbar vor dem Wickeln des Spulendrahtes 3 zur Wicklung auf den Isolierkörper 2 und/oder den Spulendraht 3 aufgebracht wird. Vorteilhaft dabei ist, dass ein schnell verdampfendes Lösungsmittel zur chemischen Aktivierung der ersten Kontaktfläche 41 verwendet werden kann.

Herkömmliche Isolierkörper 2 weisen Führungen zur Führung des Spulendrahtes 3 auf, wobei die Führungen den Spulendraht 3 nicht großflächig kontaktieren, da ein großflächig Anliegen der Führungen am Spulendraht 3 die Präzision der Führung des Spulendrahtes 3 vermindert bzw. wesentlich erschwert. Dies deshalb, da Ungenauigkeiten der Kontur des Spulendrahtes 3 bei flächiger Führung sehr schnell die Präzision der Führung des Spulendrahtes 3 beeinträchtigen. In vorteilhafter Weiterbildung kann erfindungsgemäß jedoch vorgesehen sein, dass der Spulenkörpers 21 die wenigstens eine Rinne 18 zur großflächig formschlüssigen Aufnahme des Spulendrahtes 3 aufweist, wobei die Rinne 18 zur Aufnahme des Spulendrahtes 3 am festen Isolierkörpers 2 vorgeformt wird, und wobei die Rinne 18 an eine Umfangskontur Spulendrahtes 3 angeglichen wird. Vorteilhaft dabei ist, dass bereits die Kontaktfläche zwischen der Rinne 18 und dem Spulendraht 3 groß ist und dabei bereits bei geringer Erweichung der Beschichtung 31 des Spulendrahtes 3 und/oder des Isolierkörpers 2 eine guter Wärmeübergang gewährleistet werden kann.

Der Spulendraht 3 kann rund, also als Runddraht, oval, also als Ovaldraht, quadratisch, also als quadratischer Draht, und/oder rechteckig, also als Flachdraht, ausgebildet sein. Bekannter Rechteckdraht weist dabei eine Umfangskontur von beispielsweise 1,5mm mal 1,5mm auf. Bekannter Flachdraht weist dabei eine Umfangskontur von 1mm mal 2mm. Kanten des Rechteckdrahts und des Flachdrahtes weisen üblicherweise einen Radius zwischen 0,3mm bis 0,5mm aufweisen. Dieser Radius kommt unter andern daher, dass der Rechteckdraht bzw. der Flachdraht üblicherweise mittels Formwalzens eines Runddrahtes in Form gebracht werden. Die an die Umfangskontur angepassten Rinnen 18 können dabei an den Runddraht, den Rechtecksdraht und/oder den Flachdraht angeglichen sein, wobei entweder der Radius des Runddrahtes oder der Kantenradius nachgebildet werden kann. Wenngleich hiebei zur präzisen Führung des Spulendrahtes 3 sowohl Spulendraht 3 als auch die wenigstens eine Rinne 18 mit besonders hoher Präzision und mit geringen Toleranzen zu fertigen wären, wobei der geringe Mehraufwand eine erheblich verbesserten Wärmeübergang zwischen dem Spulendraht 3 und dem Isolierkörper 2 gewährleisten kann.

In diesem Zusammenhang sind an den Längswandungen 28 des Spulenkörpers 21 die Rinne 18 parallel zur Längsrichtung 19 der Spule 1 ausgerichtet, womit die Spulendrähte 3 in diesem Bereich zur Längsrichtung 19 parallel ausgerichtet geordnet gewickelt werden können. In den Fig. 1 und 3 bis 13 ist die Blickrichtung in Richtung der Längsrichtung 19 gerichtet, womit diese Fig. die Frontsicht der Spule 1 abbilden. Insbesondere wenn der Spulenkörpers 21 und/oder die Beschichtung 31 wenigstens bereichsweise plastisch verformt wird, können sich der Spulendraht 3 und der Spulenkörpers 21 auch in Fertigungstoleranzen aneinander angleichen, womit dauerhaft ein geringer Wärmekontaktwiderstand gewährleistet werden kann.

In vorteilhafter Weiterbildung kann vorgesehen sein, dass der Isolierkörper 2 mit dem Polzahn 5 klebeverbunden ist. Derart kann das der Isolierkörper 2 am Polzahn 5 lagefest angeordnet werden, womit der Zusammenbau der Elektromaschinenspule, insbesondere Elektromotorenspule, besonders einfach sein kann. Insbesondere kann dies die Anordnung eines dünnschichtigen Isoliermediums 22 am Polzahn 5 vereinfachen.

In Weiterbildung kann vorgesehen sein, dass parallel zur Längsrichtung 19 angeordnete Längsflächen des Hauptkörpers 51 des Polzahns 5 eine Oberflächenvergrößerung, insbesondere eine Rillung, aufweisen. Derart kann die Kontaktfläche zwischen dem Polzahn 5 und dem Isolierkörper 2 vergrößert werden und der Wärmewiderstand zwischen Isolierkörper 2 und Polzahn 5 noch weiter vermindert werden. Die Oberflächenvergrößerung, insbesondere Rillung, der Längsflächen des Hauptkörpers 51 kann sowohl vorgesehen sein, wenn der Isolierkörper 2 als Spulenkörper 21 als auch wenn Isolierkörper 2 als dünnschichtiges Isoliermedium 22 ausgebildet ist.

Insbesondere kann die Oberflächenvergrößerung, insbesondere die Rillung, in Richtung der Längsrichtung 19 ausgerichtet sein, und dabei kompatibel mit dem Aufschieben beispielsweise eines klammerförmigen Spulenkörpers 21 auf den Polzahn 5 sein. Die Oberflächenvergrößerung, insbesondere die Rillung, der Längsflächen kann dabei insbesondere derart ausgebildet sein, dass der Spulenkörper 21 eine im Wesentlichen konstante Wandstärke im Bereich dessen zur Längsrichtung 19 parallelen Längswandungen 28 aufweist.

Insbesondere kann der Isolierkörper 2 mehrstückig ausgebildet sein, wobei die mehreren Stücke, aus welchen der Isolierkörper 2 zusammengesetzt ist, in die Wickelmaschine einlegbar sind, insbesondere dabei am Polzahn 5 anordenbar sind, und entweder selbsttätig zusammenhalten oder mittels dem anschließenden Wickeln der Wicklung zusammen gehalten werden.

Besonders hoch kann der Wärmeübergang zwischen dem Spulendraht 3 und dem Isolierkörper 2 sein, wenn die Spule 1 zusätzlich in einem dem Arbeitsschritt des miteinander-Verpresses der Beschichtung 31 des Spulendrahtes 3 mit dem Isolierkörper 2 nachfolgendem, insbesondere in einem letzten Arbeitsschritt, zusätzlich, mit einer Tränk- oder Vergussmasse vergossen wird. Vorteilhaft dabei ist, dass gegebenenfalls verbleibende Mikrolufteinschlüsse und Mikroabstände zwischen der Beschichtung 31 und dem Isolierkörper 2 ausgegossen werden können, wobei die Wärmeleitfähigkeit in diesem Bereich weiter gesteigert werden kann. Dabei umfasst die Spule 1 auch die zum Vergießen verwendete Tränk- oder Vergussmasse.

Zwei Statorzähne können benachbart derart zueinander angeordnet werden, dass eine erste Wicklung auf einem ersten Statorzahn der Statorzähne des Stators gewickelt ist und gegebenenfalls eine zweite Wicklung auf einen zweiten Statorzahn der Statorzähne des Stators gewickelt ist und wobei die erste Wicklung und die zweite Wicklung bereichsweise zueinander gerichtet sind und dabei in diesem Bereich zwischen der ersten Wicklung und der zweiten Wicklung ein Zwischenraum ausgebildet ist. In vorteilhafter Weiterbildung des Stators kann hiebei vorgesehen sein, dass nach dem Zusammensetzen der mehreren Statorzähne zum Stator ein Anpresselement in den Zwischenraum zwischen der ersten Wicklung und der zweiten Wicklung eingesetzt wird. Wenn sich die erste Wicklung und/oder zweite Wicklung erwärmungsbedingt ausdehnen, dient das Anpresselement dazu, dass die Wicklungen, also die erste Wicklung und/oder die zweite Wicklung, an den Isolierkörper 2 angepresst werden, womit der Wärmekontaktwiderstand zwischen dem Spulendraht 3 und dem Isolierkörper 2 im oberen Bereich der Betriebstemperatur der Spule 1 gering gehalten werden kann bzw. sogar - aufgrund des erhöhten Anpressdrucks zwischen dem Spulendraht 3 und dem Isolierkörper 2 - weiter verringert werden kann. Insbesondere kann das Anpresselement bei Raumtemperatur, also 20°C, und darüber sowohl die erste Wicklung als auch die zweite Wicklung kontaktieren. Bevorzugt kann das Anpresselement bei Raumtemperatur und darüber sowohl an der ersten Wicklung als auch an der zweiten Wicklung anhaften. Wenn der zweite Statorzahn nicht bewickelt ist, also keine zweite Wicklung umfasst, kann dass Anpresselement unmittelbar zwischen der ersten Wicklung und dem zweiten Statorzahn ausgebildet sein, womit das Anpresselement lediglich zum anpressen der ersten Wicklung an den ersten Statorzahn vorgesehen ist.

In vorteilhafter Weiterbildung des Anpresselements kann dieses thixotrop oder pastös derart ausgebildet sein, dass das Anpresselement nach dem Einsetzten in den Zwischenraum lagefest angeordnet ist, womit die auf das Anpresselement wirkende Schwerkraft die Position des Anpresselements im Zwischenraum nicht ändert. In diesem Sinne ist das Anpresselement hiebei tropffrei ausgebildet.

Sofern die Beschichtung 31 und/oder der Isolierkörper 2 im Prozessschritt des Erweichens im Wesentlichen lediglich mikroplastisch verformt werden, kann dies als Anschmelzen des Spulendrahtes 3 am Isolierkörper 2 bezeichnet werden.

Sofern die Beschichtung 31 und/oder der Isolierkörper 2 im Prozessschritt des Erweichens plastisch verformt werden und/oder bereichsweise ineinander einfließen bzw. überfließen, kann dies als Verschmelzen des Spulendrahtes 3 und des Isolierkörpers 2 bezeichnet werden. In vorteilhafter Weiterbildung kann vorgesehen sein, dass am Hauptkörper 51 des Polzahns 5 und/oder auf dem Isolierkörper 2 eine Wärmeleitbeschichtung vorgesehen ist, wobei vorgesehen ist, dass die Wärmeleitbeschichtung zwischen dem Polzahn 5 und dem Isolierkörper 2 und/oder zwischen dem Isolierkörper 2 und dem Spulendraht 3 ausgebildet ist. Am Isolierkörper 2 kann die Wärmeleitbeschichtung an der dem Polzahn 5 zugewandten Fläche und/oder an der dem Polzahn 5 abgewandten Fläche vorgesehen sein. Vorteilhaft dabei ist, dass der Wärmeübergang zwischen dem Polzahn 5 und dem Isolierkörper 2 und/oder zwischen dem Isolierkörper 2 und dem Spulendraht 3 weiter verbessert werden kann. Vorteilhaft dabei ist, dass durch die vorteilhafte Ausbildung des Isolierkörpers 2, die Wärmeleitbeschichtung beim Zusammenbau von Polzahn 5 und Isolierkörper 2 wenig bis nicht abgeschabt bzw. abgeschert wird.

Insbesondere kann die Wärmeleitbeschichtung pastös, beispielsweise als Wärmeleitpaste, ausgebildet sein. Vorteilhaft dabei ist, dass die Wärmeleitbeschichtung Oberflächenunebenheiten ausgleichen kann.

Insbesondere kann die Wärmeleitbeschichtung haftvermittelnd, beispielsweise als Wärmeleitkleber, ausgebildet sein. Vorteilhaft dabei ist, dass derart der weiter verbesserte Wärmeübergang dauerhaft gewährleistet werden kann. Insbesondere kann der Wärmeleitkleber auch als Wärmeleitklebefolie ausgebildet sein.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zum Herstellen einer Spule (1) für eine elektrische Maschine, insbesondere einen Elektromotor, wobei ein fester Isolierkörper (2) in einer Wickelmaschine, angeordnet wird, anschließend über dem Isolierkörper (2) zumindest ein eine feste isolierende Beschichtung (31) aufweisender Spulendraht (3) zu einer Wicklung gewickelt wird, wobei der Spulendraht (3) bereichsweise mit dem Isolierköper (2) kontaktiert wird, wobei die Summe der Fläche bzw. Flächen, an welcher der Spulendraht (3) den Isolierkörper (2) kontaktiert, nach dem Wickeln eine erste Kontaktfläche (41) zwischen dem Spulendraht (3) und dem Isolierkörper (2) ausbildet, **dadurch gekennzeichnet, dass** anschließend an das Wickeln zur formschlüssigen Vergrößerung der ersten Kontaktfläche (41) zu einer zweiten Kontaktfläche (42) zwischen dem Spulendraht (3) und dem Isolierkörper (2) lediglich der feste Isolierkörper (2) wenigstens im Bereich der ersten Kontaktfläche (41) thermisch oder chemisch für eine vorbestimmbare Zeitspanne erweicht wird und die Beschichtung (31) des Spulendrahtes (3) und der Isolierkörper (2) wenigstens zeitweise während dieser vorbestimmbaren Zeitspanne miteinander verpresst werden.

2. Verfahren nach Anspruch 1, **dadurch gekennzeichnet, dass** mittels des Erweichens und des Anpressens des festen Isolierkörpers (2) die Beschichtung (31) des Spulendrahtes (3) unmittelbar mit dem Isolierkörper (2) haftend verbunden wird.

3. Verfahren nach Anspruch 1 oder 2, **dadurch gekennzeichnet, dass** am festen Isolierkörpes (2) wenigstens eine Rinne (18) zur großflächigen Aufnahme des Spulendrahtes (3) vorgeformt wird, und dass die Rinne (18) an eine Umfangskontur Spulendrahtes (3) angeglichen wird.

4. Verfahren nach einem der Ansprüche 1 bis 3, **dadurch gekennzeichnet, dass** ein dünnschichtiges Isoliermedium (22) in die Wickelmaschine eingelegt wird bevor die Wicklung über dem Isolierkörper (2) gewickelt wird, wobei der Isolierkörper (2) das dünnschichtige Isoliermedium (22) umfasst, insbesondere als das dünnschichtige Isoliermedium (22) ausgebildet ist.

5. Verfahren nach einem der Ansprüche 1 bis 4, **dadurch gekennzeichnet, dass** als Isolierkörper (2) ein bereichsweise an eine Wicklungsgeometrie angepasster Spulenkörper (21) in die Wickelmaschine eingelegt wird, und dass der Spulenkörper (21) zur formschlüssigen Vergrößerung der ersten Kontaktfläche (41) zur zweiten Kontaktfläche (42) wenigstens im Bereich der ersten Kontaktfläche (41) thermisch oder chemisch für eine vorbestimmbare Zeitspanne erweicht wird.

6. Verfahren nach einem der Ansprüche 1 bis 5, **dadurch gekennzeichnet, dass** die Wicklung wenigstens zeitweise während des Erweichens des Isolierkörpers (2) an den Isolierkörper (2) angepresst wird.

7. Verfahren nach einem der Ansprüche 1 bis 6, **dadurch gekennzeichnet, dass** die Spule (1) zusätzlich mit einer Tränk- oder Vergussmasse vergossen wird.

## Claims

1. Method for producing a coil (1) for an electric machine, in particular an electric motor, wherein a fixed insulating body (2) is arranged in a winding machine, at least one coil wire (3) having a fixed insulating coating (31) is subsequently wound over the insulating body (2) to form a winding, wherein the coil wire (3) is contacted in regions with the insulating body (2), wherein the sum total of the surface area or areas where the coil wire contacts the insulating body (2) forms a first contact surface (41) between the coil wire (3) and the insulating body (2) after the winding, **characterized in that** after the winding, only the solid insulating body (2), at least in the region of the first contact surface (41), is softened thermally or chemically for a predeterminable period of time in order to positively enlarge the first contact surface (41) in relation to a second contact surface (42) between the coil wire (3) and the insulating body (2), and the coating (31) of the coil wire (3) and the insulating body (2) are pressed together at least temporarily during this predeterminable period of time.

2. Method according to claim 1, **characterized in that,** by means of softening and pressing the solid insulating body (2) against it, the coating (31) of the coil wire (3) is adhesively connected directly to the insulating body (2).

3. Method according to claim 1 or 2, **characterized in that** at least one channel (18) for receiving the coil wire over a large area is preformed on the solid insulating body (2), and **in that** the channel (18) is matched to a circumferential contour of the coil wire (3).

4. Method according to one of claims 1 to 3, **characterized in that** a thin-layer insulating medium (22) is inserted into the winding machine before the winding is wound over the insulating body (2), wherein the insulating body (2) comprises the thin-layer insulating medium (22) and, in particular, is designed as the thin-layer insulating medium (22).

5. Method according to one of claims 1 to 4, **characterized in that** a coil former (21) adapted in regions to a winding geometry is inserted into the winding machine as an insulating body (2), and **in that** the coil former (21) is softened thermally or chemically for a predeterminable period of time at least in the region of the first contact surface (41) in order to positively enlarge the first contact surface (41) in relation to the second contact surface (42).

6. Method according to one of claims 1 to 5, **characterized in that** the winding is pressed against the insulating body (2) at least temporarily during softening of the insulating body (2).

7. Method according to one of claims 1 to 6, **characterized in that** the coil (1) is additionally potted with an impregnating or potting compound.

## Revendications

1. Procédé pour la fabrication d'une bobine (1) pour une machine électrique, en particulier un moteur électrique, dans lequel un isolateur solide (2) est disposé dans une bobineuse, puis au moins un fil de bobine (3) présentant un revêtement isolant (31) est enroulé sur l'isolateur (2) pour former un enroulement, dans lequel le fil de bobine (3) est mis en contact par endroits avec l'isolateur (2), la somme de la surface ou des surfaces dans lesquelles le fil de bobine (3) est en contact avec l'isolateur (2) formant après l'enroulement une première surface de contact (41) entre le fil de bobine (3) et l'isolateur (2), **caractérisé en ce qu'**après l'enroulement, afin d'augmenter la première surface de contact (41) en correspondance de forme pour obtenir une deuxième surface de contact (42) entre le fil de bobine (3) et l'isolateur (2), l'isolateur solide (2) seul est ramolli au moins dans la région de la première surface de contact (41) par un moyen thermique ou chimique pendant une durée pouvant être prédéterminée et le revêtement (31) du fil de bobine (3) et l'isolateur (2) sont pressés ensemble au moins temporairement pendant cette durée.

2. Procédé selon la revendication 1, **caractérisé en ce que** le ramollissement et le pressage de l'isolateur solide (2) réalisent une liaison directe par adhérence du revêtement (31) du fil de bobine (3) avec l'isolateur (2).

3. Procédé selon la revendication 1 ou 2, **caractérisé en ce qu'**au moins une rainure (18) est préformée sur l'isolateur solide (2) pour recevoir le fil de bobine (3) sur une grande surface et **en ce que** la rainure (18) est rapprochée d'un contour de circonférence du fil de bobine (3).

4. Procédé selon l'une des revendications 1 à 3, **caractérisé en ce qu'**un isolant en couche mince (22) est introduit dans la bobineuse avant que l'enroulement soit enroulé par-dessus l'isolateur (2), l'isolateur (2) comprenant l'isolant en couche mince (22), en particulier étant conformé comme l'isolant en couche mince (22).

5. Procédé selon l'une des revendications 1 à 4, **caractérisé en ce qu'**une armature de bobine (21) adapté par endroits à une géométrie d'enroulement est introduite dans la bobineuse pour servir d'isolateur (2) et **en ce que** l'armature de bobine (21) est ramollie au moins dans la région de la première surface de contact (41) par un moyen thermique ou chimique, pendant une durée pouvant être prédéterminée, afin d'augmenter la première surface de contact (41) en correspondance de forme pour obtenir une deuxième surface de contact (42).

6. Procédé selon l'une des revendications 1 à 5, **caractérisé en ce que** l'enroulement est pressé au moins temporairement sur l'isolateur (2) pendant le ramollissement de l'isolateur (2).

7. Procédé selon l'une des revendications 1 à 6, **caractérisé en ce que** la bobine (1) est en outre enrobée avec une masse d'imprégnation ou d'enrobage.
